# DEMANDE DE BREVET EUROPEEN

(11) **EP 0 620 451 A1**
(43) Date de publication de la demande: **19.10.1994**
(21) Numéro de dépôt: 94400774.9
(22) Date de dépôt: 11.04.1994
(51) Int. Cl.: G01T 1/00, G01T 3/08

(54) **Dosimètre de particules**

(30) Priorité: 13.04.1993 FR 9304314
(71) Demandeur: COMMISSARIAT A L'ENERGIE ATOMIQUE, F-75015 Paris Cédex 15 (FR)
(72) Inventeur: Barthe, Jean, F-91300 Massy (FR); Lahaye, Thierry, F-91600 Savigny/Orge (FR)
(74) Mandataire: Ilgart, Jean-Christophe

(57) **Abrégé**

Dosimètre comprenant une diode (1) comme élément sensible aux rayonnements et un circuit électrique de mesure divisé en deux branches (9) munies de filtres fréquentiels (10) différents, dont l'une mesure la contribution des protons et des neutrons et l'autre celle des électrons et des photons, particules qui délivrent des impulsions de forme différente en atteignant la diode. La dose effectivement reçue peut être déterminée avec une bonne précision.

Application aux dosimètres portatifs.

## Description

L'invention se rapporte à un dosimètre de particules.

Il est nécessaire d'évaluer des doses de particules nucléaires dans plusieurs applications et en particulier pour évaluer les risques courus par les êtres vivants, qui sont précisément évalués par ce qu'on appelle l'équivalent de dose, c'est-à-dire la somme des doses des particules de chaque espèce pondérées par des coefficients multiplicateurs (facteurs de qualité).

Un exemple de dosimètre est décrit dans un brevet français antérieur des mêmes inventeurs (FR-A-2 645 652). Il comprend deux diodes à semiconducteur délivrant chacune un signal sur un circuit électrique. Ce signal est proportionnel au débit d'équivalent de dose des particules qui atteignent la diode. La particularité de ce dispositif antérieur consiste en ce que l'une des diodes est recouverte par un écran hydrogéné qui réagit avec les neutrons, de sorte qu'elle seule est sensible aux neutrons en plus des photons. Les mesures consistent à soustraire au signal de cette diode celui de l'autre, pour obtenir le débit de dose associé aux seuls neutrons du rayonnement.

On peut adresser deux critiques à cet appareil : l'influence du rayonnement photonique (X ou γ) qui compose le rayonnement mixte réel est ignorée bien que ses effets puissent être tout aussi importants en pratique, et surtout les diodes sont toujours différentes quelles que soit les précautions de fabrication prises et ont des sensibilités différentes. Le résultat peut donc être entaché d'erreurs assez importantes.

On connaît aussi (par exemple par le brevet américain 4 489 315) des dosimètres portatifs qui mesurent séparément les débits de deux catégories différentes de neutrons pour évaluer l'équivalent de la dose grâce à une pondération. Ces dispositifs sont sujets aux mêmes inconvénients d'ignorer le débit des rayons γ et d'utiliser deux détecteurs séparés.

Le but de l'invention est de fournir une indication de l'équivalent de dose reçue en mesurant à la fois les débits de particules caractéristiques du rayonnement neutronique et du rayonnement γ. Grâce à cette distinction, il est possible de faire la pondération qui donne l'équivalent de dose. Une meilleure précision est obtenue bien que l'appareil soit plus simple, car une seule diode est employée.

L'invention est donc relative à un dosimètre comprenant une diode (unique) à semiconducteur délivrant un signal sur un circuit électrique en fonction des débits de particules qui atteignent la diode, le circuit électrique comprenant des moyens de mesure du signal, dosimètre caractérisé en ce que le circuit et les moyens de mesure sont dédoublés en deux branches portant des filtres fréquentiels différents et dont l'une est adaptée à la mesure du débit de neutrons par l'intermédiaire des protons et des particules α et l'autre est adaptée à la mesure du débit de photons par l'intermédiaire des électrons.

L'un des filtres peut être passe-haut et l'autre passe-bas.

L'invention va maintenant être décrite plus en détail à l'aide des figures suivantes annexées à titre illustratif et non limitatif :

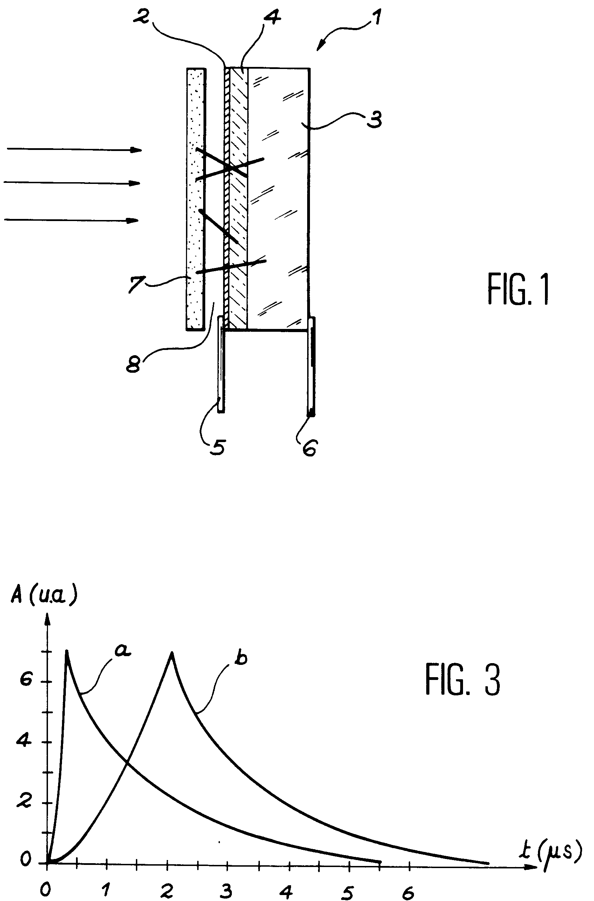

- la figure 1 est une illustration de la diode,
- la figure 2 est une illustration du circuit, et
- la figure 3 est une illustration des phénomènes constatés.

La diode 1 unique est uniformément composée d'une électrode 2 à l'avant, d'un substrat de silicium 3 à l'arrière et d'une zone désertée 4 intermédiaire. Les indications données dans le brevet antérieur sont encore valables ici ; en particulier, la tension de polarisation de la diode 1 peut être de quelques volts, ce qui permet de l'alimenter par des piles et de rendre le dosimètre portatif ; la surface de la diode 1 peut être de quelques centimètres carrés ; et l'épaisseur de la zone désertée 4 peut être de quelques dizaines de micromètres.

L'électrode 2 est une plaquette très mince reliée à un contact électrique 5, anodique, et un autre contact électrique 6, cathodique, est relié au substrat de silicium 3. Une impulsion circule dans le circuit électrique situé entre le contact anodique 5 et le contact cathodique 6 lorsque la zone désertée 4 est atteinte par une particule. Cependant, les neutrons ne sont guère aptes à agir sur le silicium, et c'est pourquoi on prévoit un convertisseur hydrogéné 7 qui recouvre l'électrode 2 en étant séparé d'elle par un espace de contact 8.

Le convertisseur hydrogéné 7 réagit à chaque impact de neutron en libérant un proton de recul vers la diode 1. Le convertisseur hydrogéné 7 peut consister, comme on l'a encore mentionné dans le brevet précédent, en une feuille de polyéthylène enrichie en atomes de bore, de lithium ou d'hélium ; la densité et la profondeur d'implantation, ainsi que l'épaisseur de la feuille, déterminent la sensibilité du convertisseur hydrogéné 7. Mais il est difficile de choisir ces facteurs pour que la sensibilité soit uniforme pour toutes les énergies de neutrons.

C'est pourquoi on préfère utiliser un convertisseur hydrogéné 7 sensible aux neutrons rapides et insensible aux neutrons thermiques, disparité qui est corrigée en enrichissant le substrat 3 d'atomes de bore 10 à une concentration suffisante pour que les neutrons thermiques produisent à leur tour des particules α en proportion telle que la sensibilité globale du système soit identique pour les neutrons rapides et thermiques.

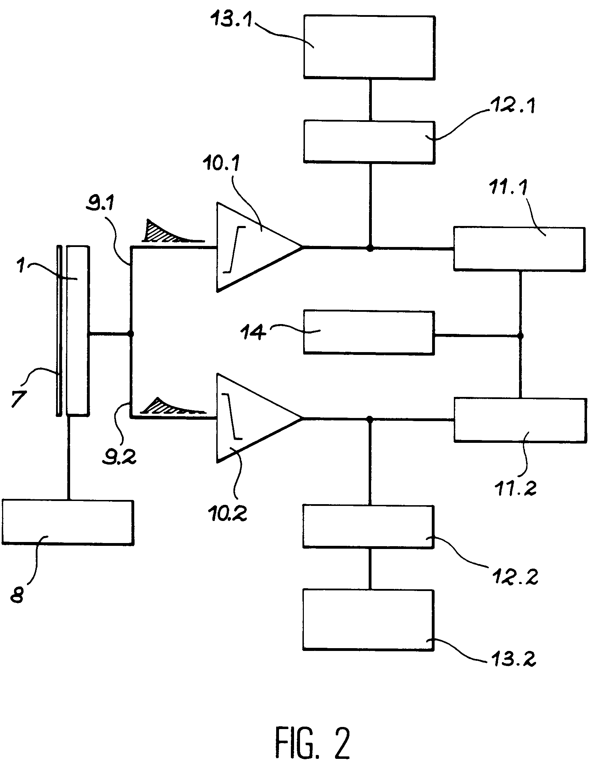

On passe maintenant à la figure 2. Le contact anodique 5 est relié à une alimentation électrique 8, et le circuit situé du côté du contact cathodique 6 est dédoublé en deux branches 9.1 et 9.2 sur chacune desquelles on trouve successivement un filtre 10.1 et 10.2, un appareil de mesure de débit 11, un intégrateur 12 et un module d'affichage 13. Ces trois derniers éléments 11, 12 et 13 des deux branches 9 sont identiques mais les filtres 10.1 et 10.2 sont différents car le premier est un filtre passe-haut et le second un filtre passe-bas : la branche 9.1 est affectée à la mesure des débits de protons et particules α collectés par la diode 1 et la branche 9.2 est affectée à la mesure du débit d'électrons collectés par la diode 1 en réponse aux impacts d'électrons incidents ou après une conversion du flux des photons incidents par effet photoélectrique ou Compton.

Car le phénomène rencontré est celui qui est résumé à la figure 3, où les courbes a et b indiquent la forme des impulsions (en unités arbitraires) en fonction du temps (exprimé en microsecondes) produites quand, respectivement, un proton, une particule α ou un neutron, ou un photon ou un électron atteint la diode 1 : le maximum de la courbe a est atteint au bout d'un temps compris entre 0,05 et 0,5 microseconde environ, alors que la montée de l'impulsion est sensiblement plus lente pour la courbe b car le maximum n'est atteint qu'après 0,5 à 2 microsecondes environ. Le filtre 10.1 est en conséquence prévu pour écarter la contribution de toutes les impulsions dont le temps de montée est supérieur à 0,5 microseconde, alors que le filtre 10.2 est adapté à écarter la contribution de toutes les impulsions dont le temps de montée est inférieur à 0,5 microseconde. Cette différence des courbes d'impulsions, qui a été constatée expérimentalement pour les diodes, rend la discrimination plus facile. Les débits de particules lourdes (neutrons, particules α et protons) et légères (électrons et photons) sont mesurés indépendamment et intégrés respectivement par les intégrateurs 12.1 et 12.2. Une minuterie 14 permet de cadencer la mesure du débit (pour obtenir une moyenne glissante) mais le système peut aussi donner l'équivalent de dose total depuis le début de l'utilisation du dosimètre, et une alarme peut être programmée si le débit ou la dose totale dépasse un seuil donné. Tous ces aménagements dépendent de la souplesse d'utilisation souhaitée et peuvent être réalisés sans difficulté par l'homme du métier.

Le dosimètre reste normalement petit et léger, ce qui autorise à le rendre portatif et à l'accrocher à une personne dont l'exposition quotidienne aux rayonnements doit être suivie.

## Revendications

1. Dosimètre comprenant une diode (1) à semi-conducteur (3) délivrant un signal sur un circuit électrique en fonction des débits de particules qui atteignent la diode, le circuit électrique comprenant des moyens de mesure du signal, caractérisé en ce que le circuit et les moyens de mesure sont dédoublés en deux branches (9.1, 9.2) portant des filtres fréquentiels différents (10.1, 10.2) et dont l'une est adaptée à la mesure du débit de neutrons et dont l'autre est adaptée à la mesure du débit de photons.

2. Dosimètre suivant la revendication 1, caractérisé en ce que l'un des filtres est un filtre passe-haut et l'autre des filtres est un filtre passe-bas.

3. Dosimètre suivant l'une quelconque des revendications 1 ou 2, caractérisé en ce que la diode (1) est recouverte d'un convertisseur hydrogéné (7) émettant des protons quand il est atteint par des neutrons notamment rapides.

4. Dosimètre suivant la revendication 3, caractérisé en ce que la diode est enrichie en atomes émettant des protons quand ils sont atteints par des neutrons thermiques.
